# EUROPEAN PATENT SPECIFICATION

(11) **EP 4 361 469 B1**
(45) Date of publication and mention of the grant of the patent: **25.11.2026**
(21) Application number: 22851664.7
(22) Date of filing: 16.05.2022
(51) Int. Cl.: F16H 57/04, F16H 57/02, F16H 57/031

(54) **SPEED REDUCER CASING AND ELECTRIC DRIVE ASSEMBLY**
UNTERSETZUNGSGETRIEBEGEHÄUSE UND ELEKTRISCHE ANTRIEBSANORDNUNG
CARTER DE RÉDUCTEUR DE VITESSE ET ENSEMBLE D'ENTRAÎNEMENT ÉLECTRIQUE

(30) Priority: 03.08.2021 CN 202121795244 U
(43) Date of publication of application: 01.05.2024
(73) Proprietor: Jing-Jin Electric Technologies Co., Ltd., Beijing 100015 (CN)
(72) Inventor: LIU, Yang, Beijing 100015 (CN); LI, Jianwen, Beijing 100015 (CN); PAN, Fayu, Beijing 100015 (CN); HUANG, Yanan, Beijing 100015 (CN)
(74) Representative: Schwarz & Partner Patentanwälte GmbH
(86) International application number: PCT/CN2022/093088
(87) International publication number: WO 2023/010946

(56) References cited:
- EP-A1- 4 361 469
- CN-A- 109 707 825
- CN-A- 110 630 731
- CN-A- 111 927 942
- CN-U- 212 063 728
- CN-U- 212 643 503
- CN-U- 212 690 794
- CN-U- 216 158 238
- US-A- 3 736 812

## Description

### CROSS REFERENCING OF RELATED APPLICATIONS

This application claims priority from the Chinese patent application No. 202121795244.5 filed with the Chinese Patent Office on August 3, 2021 and entitled "SPEED REDUCER CASING AND ELECTRIC DRIVE ASSEMBLY".

### TECHNICAL FIELD

The present invention belongs to the technical field of cooling of a reducer, and particularly relates to a reducer housing and an electric drive assembly.

### BACKGROUND

At present, the main cooling method for a reducer in new energy vehicles is cooling by stirring oil with a gear, in which the lubricating oil inside the reducer housing is stirred by a gear so that the lubricating oil flows to the gears, bearings, and other positions along with the stirring of gear, thereby taking away the heat generated during the operation of reducer and achieving cooling.

Since new energy vehicles have to face various complex road conditions, and the rotational speed of the motor in new energy vehicles is getting faster, the requirement about temperature rise in the entire vehicle is also increasing. Considering the need to balance the temperature rise and service life, the cooling method only by stirring oil with a gear is no longer sufficient to meet the development requirements of new energy vehicles for high power, high torque, and balance between maximum speed and maximum service life.

Document CN 110 630 731 A, according to its abstract, discloses a reducer water cooling structure and a reducer assembly. The water cooling structure includes a cavity formed by a reducer housing and a cover plate, and the cover plate is fixedly connected to the cavity; the cavity is provided with a water inlet and a water outlet, one or more partitions are also arranged on the two opposite side walls of the cavity, the partitions are arranged in a staggered manner and are connected to one side wall of the cavity, gaps are reserved between the partitions and the other opposite side wall, and therefore a zigzag water channel is formed; the water inlet and the water outlet are formed in the two ends of the water channel; and the partitions and the cavity side wall parallel to the partitions are also vertically provided with a plurality of baffles, and the baffles are staggered. The water cooling structure is integrated with the reducer housing into one component, the structure is simple, space is saved, distribution on a vehicle is facilitated, and the cooling efficiency is further improved through the specific structure.

Document CN 111 927 942 A, according to its abstract, discloses a liquid-cooling heat radiation structure and a gearbox shell. The liquid-cooling heat radiation structure comprises a cooling liquid tank and a cover plate. The cover plate is used for sealing the cooling liquid tank, and a liquid inlet and a liquid outlet are formed in the two ends of the cooling liquid tank correspondingly. Multiple fixed flow guide ribs arranged alternately at intervals are arranged in the cooling liquid tank, and a continuous S-shaped or labyrinth-shaped channel for allowing cooling liquid to flow through is formed. Suspended flow guide ribs are arranged between the fixed flow guided ribs or between the fixed flow guide ribs and the inner wall of the cooling liquid tank. According to the liquid-cooling heat radiation structure, the suspended flow guide ribs and the fixed flow guide ribs for guiding the flowing direction of circular cooling liquid are arranged, so that the heat radiation contact area of the cooling liquid and the heat radiation structure is increased, and dead zones where the cooling liquid does flow or generates vortex are avoided; and the liquid-cooling heat radiation structure is high in heat exchange efficiency, and compared with other heat radiation manners, the cost is low.

### SUMMARY

With respect to the above problems, the present invention provides a reducer housing and an electric drive assembly in order to overcome or at least partially solve the above problems.

In order to achieve the above object, the present invention adopts the following technical solutions.

An aspect of the present invention provides a reducer housing, wherein a liquid cooled heat dissipation structure is provided at a bottom of the reducer housing through which lubricating oil flows;
the liquid cooled heat dissipation structure comprises a coolant tank and a cover plate, the cover plate is used to seal the coolant tank, and two ends of the coolant tank are respectively provided with a liquid inlet and a liquid outlet;
several convex structures and concave structures are alternately provided on the top of coolant tank, so that inner and outer sides of the top of the coolant tank are both in a wavy shape, thereby increasing a contact area between the coolant tank and the lubricating oil inside the reducer housing.

Further, the cover plate or the side wall of the coolant tank are provided thereon with several flow guiding plates, the flow guiding plates are vertical to the bottom of the coolant tank, the positions of flow guiding plates correspond to the positions of concave structures, and the flow guiding plates cooperate with the convex structures to form a continuous S-shaped passage for the coolant to flow through.

Further, an amplitude of a wavy top of the coolant tank decreases in steps from the liquid inlet to the liquid outlet.

Further, the liquid cooled heat dissipation structure and the reducer housing are integrally molded.

Further, a sealing ring is provided between the coolant tank and the cover plate.

Further, the coolant tank and the cover plate are fixed by bolts/screws or by welding.

Another aspect of the present invention provides an electric drive assembly comprising a motor unit and a reducer unit. The motor unit comprises a motor housing, and the reducer unit comprises a reducer housing as described above.

Further, the liquid inlet is communicated with a coolant passage inside a motor water j acket;
or
the liquid inlet is communicated with an outlet of a motor coolant passage.

Further, an oil guide rib and an oil collection tank are provided inside the reducer housing, the oil guide rib is used to guide the lubricating oil splashed by the reducer gear into the oil collection tank as well as the parts to be lubricated and the parts to be cooled inside the reducer housing, the lubricating oil in the oil collection tank is transferred to the parts to be lubricated and the parts to be cooled inside the motor housing through an oil passage.

Further, an oil blocking plate or an oil blocking rib is provided inside the reducer housing.

The advantages and beneficial effects of the present invention are as follows.

In the reducer housing of the present invention, by providing the coolant tank at the bottom of the reducer housing through which lubricating oil flows, and alternately providing several convex and concave structures at the top of the coolant tank so that the inner and outer surfaces of the top of the coolant tank are both in a wavy shape to increase the contact area between the coolant tank and the lubricating oil inside the reducer housing, the heat exchange between the coolant in the cooling tank and the lubricating oil can be achieved, thereby quickly removing the heat inside the reducer housing, improving the heat dissipation performance of the reducer, and thus increasing the service life of the reducer.

### BRIEF DESCRIPTION OF DRAWINGS

By reading the detailed description of the preferred embodiments below, various other advantages and benefits will become clear to a person of ordinary skill in the art. The accompanying drawings are only used for the purpose of illustrating the preferred embodiments, and should not be considered as a limitation to the present invention. Moreover, throughout the drawings, the same reference numerals are used to denote the same components. In the drawings:
FIG. 1 is a schematic cross-sectional view of the structure of a reducer housing according to an embodiment of the present invention; and
FIG. 2 is a schematic diagram of the structure of an electric drive assembly according to an embodiment of the present invention.

In the drawings: 1. coolant tank; 2. cover plate; 3. liquid inlet; 4. liquid outlet; 5. convex structure; 6. concave structure; 7. flow guiding plate; 8. motor housing; 9. oil guiding rib; 10. oil collection tank; 11. oil passage; 12. oil blocking rib.

### DETAILED DESCRIPTION

In order to make the object, technical solutions, and advantages of the present invention clearer, the present invention will be described clearly and completely in conjunction with the specific embodiments and corresponding drawings. Obviously, the embodiments described are only part of rather than all of the embodiments of the present invention. Based on the embodiments in the present invention, all other embodiments obtained by a person of ordinary skill in the art without paying creative work shall fall within the protection scope of the present invention.

The technical solutions provided in embodiments of the present invention will be explained in detail below in conjunction with the accompanying drawings.

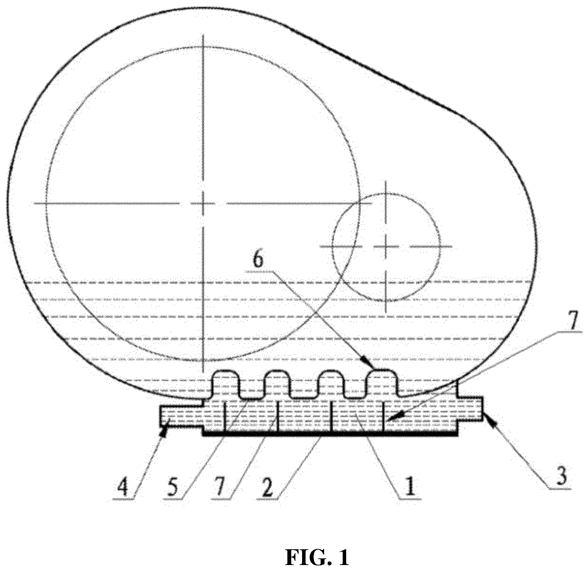

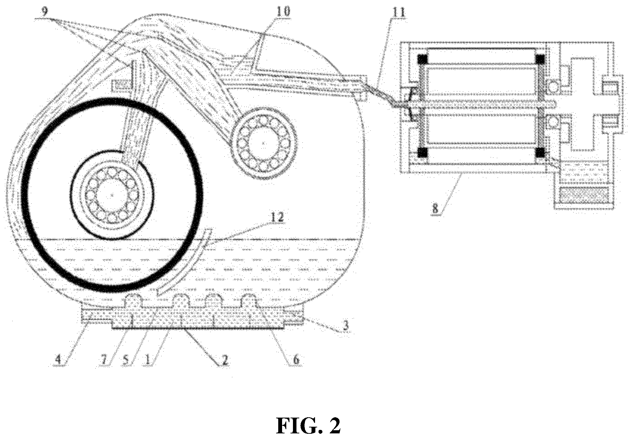

In an embodiment of the present invention, a reducer housing is disclosed. A liquid cooled heat dissipation structure is provided at the bottom of the reducer housing through which the lubricating oil flows, as shown in FIGS. 1 and 2. The liquid cooled heat dissipation structure comprises a coolant tank 1 and a cover plate 2. The cover plate 2 is used to seal the coolant tank 1. Two ends of the coolant tank 1 are respectively provided with a liquid inlet 3 and a liquid outlet 4. The positions of the liquid inlet 3 and the liquid outlet 4 can be interchanged. There may be one or more liquid cooling heat dissipation structures on the reducer housing. When there are multiple liquid cooling heat dissipation structures on the reducer housing, these multiple liquid cooling heat dissipation structures are arranged in series or parallel.

When the liquid cooled heat dissipation structure is provided at the bottom of the reducer housing, in order to improve the heat dissipation performance of the reducer, the liquid cooled heat dissipation structure can be laid flat at the bottom of the entire reducer housing.

Several convex structures 5 and concave structures 6 are alternately provided on the top of the coolant tank 1, so that the inner and outer sides of the top of the coolant tank 1 are both in a wavy shape, thereby increasing the contact area between the coolant and the bottom of coolant tank 1 to promote heat dissipation. The amplitude of the wavy shape can be adjusted. When the outer side of the top of the coolant tank 1 comes into contact with the lubricating oil, the wavy bottom can effectively increase the contact area between the coolant tank 1 and the lubricating oil inside the reducer housing, thereby promoting heat exchange. The convex structure 5 is a protrusion with respect to the top of the coolant tank 1, and the concave structure 6 is a depression with respect to the top of the coolant tank 1. In addition, the depth of the convex structure 5 and the concave structure 6 can be adjusted according to the position of the gears inside the reducer housing.

The coolant enters the coolant tank 1 through the liquid inlet 3 and exchanges heat with the lubricating oil inside the reducer housing through the convex structure 5 and the concave structure 6, thereby reducing the temperature of the lubricating oil.

In sum, in the reducer housing of this embodiment, by providing the coolant tank at the bottom of the reducer housing through which lubricating oil flows, and alternately providing several convex and concave structures at the top of the coolant tank so that the inner and outer surfaces of the top of the coolant tank are both in a wavy shape to increase the contact area between the coolant tank and the lubricating oil inside the reducer housing, the heat exchange between the coolant in the cooling tank and the lubricating oil can be achieved, thereby quickly removing the heat inside the reducer housing, improving the heat dissipation performance of the reducer, and thus increasing the service life of the reducer.

In an embodiment, as shown in FIGS. 1 and 2, the cover plate 2 or the side wall of the coolant tank 1 are provided thereon with several flow guiding plates 7, the flow guiding plates 7 are vertical to the bottom of the coolant tank 1. The number of flow guiding plates 7 is consistent with the number of concave structures 6, and the positions of flow guiding plates 7 correspond to the positions of concave structures 6. The flow guiding plates 7 cooperate with the convex structures 5 to form a continuous S-shaped passage for the coolant to flow through, allowing the coolant to flow up and down in an S-shape in the coolant tank 1.

In an embodiment, the amplitude of the wavy top of the coolant tank 1 decreases in steps from the liquid inlet 3 to the liquid outlet 4, thereby avoiding blind areas in coolant flow and increasing the heat dissipation efficiency.

In an embodiment, the liquid cooled heat dissipation structure and the reducer housing are integrally molded, thereby making the reducer structure more compact and saving manufacturing process. In addition, the liquid cooling heat dissipation structure does not need precision machining during manufacturing, so that disturbance occurs when the coolant flows in the coolant tank, thereby facilitating heat exchange between the coolant and the top of the coolant tank.

In an embodiment, a sealing ring is provided between the coolant tank 1 and the cover plate 2 for sealing between the coolant tank 1 and the cover plate 2 to prevent the coolant from flowing out.

Furthermore, the coolant tank 1 and the cover plate 2 are fixed by bolts/screws or by welding. Of course, the coolant tank 1 and the cover plate 2 may also be fixed by other means, which is also within the protection scope of the present invention.

In an embodiment of the present invention, an electric drive assembly is disclosed. The electric drive assembly comprises a motor unit and a reducer unit. As shown in FIG. 2, the motor unit comprises a motor housing 8, and the reducer unit comprises a reducer housing as described in any of the above embodiments. The electric drive assembly has excellent heat dissipation performance, can meet the needs of long-term, high-power, high torque, and high speed work under various working conditions, and improve the reliability of the vehicle power system as well as the reliability of the entire vehicle.

In an embodiment, the liquid inlet 3 may be provided on an end face of the reducer housing that connects the motor housing 8, and the liquid inlet 3 is connected to a coolant passage inside a motor water jacket through a passage provided on the motor housing. The circulating coolant enters the coolant tank 1 directly from the motor coolant passage through the liquid inlet 3 provided on the reducer housing at the joint surface.

Alternatively, a fitting may be provided at the liquid inlet 3, and the liquid inlet 3 is connected to an outlet of a motor coolant passage through a coolant pipeline. The circulating coolant flows out from the outlet of the motor coolant passage, passes through the external coolant pipeline, enters the liquid inlet 3 provided on an outer wall of the coolant tank 1, and thus enters the coolant tank 1.

The design of connecting the coolant tank 1 with the motor coolant passage allows the reducer and the motor to share one coolant circulation system, thereby saving the heat dissipation cost of the vehicle power system.

In an or some embodiments, as shown in FIG. 2, an oil guide rib 9 and an oil collection tank 10 are provided inside the reducer housing. The oil guide rib 9 is used to guide the lubricating oil splashed by the reducer gear into the oil collection tank 10 and the parts to be lubricated and the parts to be cooled inside the reducer housing. The lubricating oil in the oil collection tank 10 is transferred to the parts to be lubricated and the parts to be cooled inside the motor housing 8 through an oil passage 11, thereby achieving the lubrication and cooling of the parts. The parts to be cooled include bearings, gears, motor coils, motor rotors, etc. The parts to be lubricated include bearings, gears, oil seals, etc.

In an embodiment, as shown in FIG. 2, an oil blocking plate or an oil blocking rib 12 is provided inside the reducer housing, which can reduce the amount of lubricating oil splashed by the reducer gear during rotation, and thus reduce the power loss caused by the reducer gear's oil stirring.

The above merely describes particular embodiments of the present invention. By the teaching of the present invention, a person skilled in the art can make other modifications or variations based on the above embodiments. A person skilled in the art should appreciate that, the detailed description above is only for the purpose of better explaining the present invention, and the protection scope of the present invention should be subject to the protection scope of the claims.

## Claims

1. A reducer housing, wherein a liquid cooled heat dissipation structure is provided at a bottom of the reducer housing through which lubricating oil flows;
the liquid cooled heat dissipation structure comprises a coolant tank (1) and a cover plate (2), the cover plate (2) is used to seal the coolant tank (1), and two ends of the coolant tank (1) are respectively provided with a liquid inlet (3) and a liquid outlet (4);
several convex structures (5) and concave structures (6) are alternately provided on the top of coolant tank (1), so that inner and outer sides of the top of the coolant tank (1) are both in a wavy shape, thereby increasing a contact area between the coolant tank (1) and the lubricating oil inside the reducer housing,
**characterized in that**: the cover plate (2) or the side wall of the coolant tank (1) are provided thereon with several flow guiding plates (7), the flow guiding plates (7) are vertical to the bottom of the coolant tank (1), the positions of flow guiding plates (7) correspond to the positions of the concave structures (6), and the flow guiding plates (7) cooperate with the convex structures (5) to form a continuous S-shaped passage for the coolant to flow through.

2. The reducer housing according to claim 1, **characterized in that**: an amplitude of a wavy top of the coolant tank (1) decreases in steps from the liquid inlet (3) to the liquid outlet (4).

3. The reducer housing according to claim 1, **characterized in that**: the liquid cooled heat dissipation structure and the reducer housing are integrally molded.

4. The reducer housing according to any one of claims 1-3, **characterized in that**: a sealing ring is provided between the coolant tank (1) and the cover plate (2).

5. The reducer housing according to claim 4, **characterized in that**: the coolant tank (1) and the cover plate (2) are fixed by bolts/screws or by welding.

6. An electric drive assembly comprising a motor unit and a reducer unit, **characterized in that**: the motor unit comprises a motor housing (8), **characterized in that** the reducer unit comprises a reducer housing according to any one of claims 1-5.

7. The electric drive assembly according to claim 6, **characterized in that**: the liquid inlet (3) is communicated with a coolant passage inside a motor water jacket;
or
the liquid inlet (3) is connected to an outlet of a motor coolant passage.

8. The electric drive assembly according to claim 6, **characterized in that**: an oil guide rib and an oil collection tank (10) are provided inside the reducer housing, the oil guide rib is used to guide the lubricating oil splashed by the reducer gear into the oil collection tank (10) as well as the parts to be lubricated and the parts to be cooled inside the reducer housing, and the lubricating oil in the oil collection tank (10) is transferred to the parts to be lubricated and the parts to be cooled inside the motor housing (8) through an oil passage (11).

9. The electric drive assembly according to any one of claims 6-8, **characterized in that**: an oil blocking plate or an oil blocking rib (12) is provided inside the reducer housing.

## Patentansprüche

1. Untersetzungsgetriebegehäuse, wobei an einem Boden des Untersetzungsgetriebegehäuses, durch welchen Schmieröl strömt, eine flüssigkeitsgekühlte Wärmeableitungsstruktur vorgesehen ist;
die flüssigkeitsgekühlte Wärmeableitungsstruktur umfasst einen Kühlmitteltank (1) und eine Deckplatte (2), die Deckplatte (2) dient zum Abdichten des Kühlmitteltanks (1), und zwei Enden des Kühlmitteltanks (1) sind jeweils mit einem Flüssigkeitseinlass (3) bzw. einem Flüssigkeitsauslass (4) versehen;
an der Oberseite des Kühlmitteltanks (1) sind abwechselnd mehrere konvexe Strukturen (5) und konkave Strukturen (6) vorgesehen, sodass Innen- und Außenseiten der Oberseite des Kühlmitteltanks (1) beide wellenförmig ausgebildet sind, wodurch eine Kontaktfläche zwischen dem Kühlmitteltank (1) und dem Schmieröl innerhalb des Untersetzungsgetriebegehäuses vergrößert wird,
**dadurch gekennzeichnet, dass** die Deckplatte (2) oder die Seitenwand des Kühlmitteltanks (1) mit mehreren Strömungsleitplatten (7) versehen ist, die Strömungsleitplatten (7) senkrecht zum Boden des Kühlmitteltanks (1) stehen, die Positionen der Strömungsleitplatten (7) den Positionen der konkaven Strukturen (6) entsprechen und die Strömungsleitplatten (7) mit den konvexen Strukturen (5) zusammenwirken, um einen durchgehenden S-förmigen Kanal zu bilden, durch welchen das Kühlmittel strömt.

2. Untersetzungsgetriebegehäuse nach Anspruch 1, **dadurch gekennzeichnet, dass** eine Amplitude einer wellenförmigen Oberseite des Kühlmitteltanks (1) vom Flüssigkeitseinlass (3) zum Flüssigkeitsauslass (4) stufenweise abnimmt.

3. Untersetzungsgetriebegehäuse nach Anspruch 1, **dadurch gekennzeichnet, dass** die flüssigkeitsgekühlte Wärmeableitungsstruktur und das Untersetzungsgetriebegehäuse einstückig geformt sind.

4. Untersetzungsgetriebegehäuse nach einem der Ansprüche 1 bis 3, **dadurch gekennzeichnet, dass** zwischen dem Kühlmitteltank (1) und der Deckplatte (2) ein Dichtring vorgesehen ist.

5. Untersetzungsgetriebegehäuse nach Anspruch 4, **dadurch gekennzeichnet, dass** der Kühlmitteltank (1) und die Deckplatte (2) durch Bolzen/Schrauben oder durch Schweißen befestigt sind.

6. Elektrische Antriebsbaugruppe, umfassend eine Motoreinheit und eine Untersetzungsgetriebeeinheit, **dadurch gekennzeichnet, dass** die Motoreinheit ein Motorgehäuse (8) umfasst, **dadurch gekennzeichnet, dass** die Untersetzungsgetriebeeinheit ein Untersetzungsgetriebegehäuse nach einem der Ansprüche 1 bis 5 umfasst.

7. Elektrische Antriebsbaugruppe nach Anspruch 6, **dadurch gekennzeichnet, dass** der Flüssigkeitseinlass (3) mit einem Kühlmittelkanal innerhalb eines Motorwassermantels in Verbindung steht;
oder
der Flüssigkeitseinlass (3) mit einem Auslass eines Motorkühlmittelkanals verbunden ist.

8. Elektrische Antriebsbaugruppe nach Anspruch 6, **dadurch gekennzeichnet, dass** innerhalb des Untersetzungsgetriebegehäuses eine Ölleitrippe und ein Ölsammeltank (10) vorgesehen sind, die Ölleitrippe dazu dient, das von dem Untersetzungsgetriebezahnrad verspritzte Schmieröl in den Ölsammeltank (10) sowie zu den zu schmierenden Teilen und den zu kühlenden Teilen innerhalb des Untersetzungsgetriebegehäuses zu leiten, und das Schmieröl in dem Ölsammeltank (10) durch einen Ölkanal (11) zu den zu schmierenden Teilen und den zu kühlenden Teilen innerhalb des Motorgehäuses (8) überführt wird.

9. Elektrische Antriebsbaugruppe nach einem der Ansprüche 6 bis 8, **dadurch gekennzeichnet, dass** innerhalb des Untersetzungsgetriebegehäuses eine Ölsperrplatte oder eine Ölsperrrippe (12) vorgesehen ist.

## Revendications

1. Carter de réducteur, dans lequel une structure de dissipation thermique refroidie par liquide est prévue au fond du carter de réducteur, à travers lequel circule de l'huile de lubrification;
la structure de dissipation thermique refroidie par liquide comprend un réservoir de fluide de refroidissement (1) et une plaque de recouvrement (2), la plaque de recouvrement (2) étant utilisée pour fermer hermétiquement le réservoir de fluide de refroidissement (1), et deux extrémités du réservoir de fluide de refroidissement (1) étant respectivement pourvues d'une entrée de liquide (3) et d'une sortie de liquide (4);
plusieurs structures convexes (5) et structures concaves (6) sont disposées de façon alternée sur le haut du réservoir de fluide de refroidissement (1), de sorte que les côtés intérieur et extérieur du haut du réservoir de fluide de refroidissement (1) présentent tous deux une forme ondulée, augmentant ainsi une zone de contact entre le réservoir de fluide de refroidissement (1) et l'huile de lubrification à l'intérieur du carter de réducteur,
**caractérisé en ce que**: la plaque de recouvrement (2) ou la paroi latérale du réservoir de fluide de refroidissement (1) est pourvue de plusieurs plaques de guidage d'écoulement (7), les plaques de guidage d'écoulement (7) sont verticales par rapport au fond du réservoir de fluide de refroidissement (1), les positions des plaques de guidage d'écoulement (7) correspondent aux positions des structures concaves (6), et les plaques de guidage d'écoulement (7) coopèrent avec les structures convexes (5) pour former un passage continu en forme de S pour la circulation du fluide de refroidissement.

2. Carter de réducteur selon la revendication 1, **caractérisé en ce que**: une amplitude d'un haut ondulé du réservoir de fluide de refroidissement (1) diminue par paliers depuis l'entrée de liquide (3) jusqu'à la sortie de liquide (4).

3. Carter de réducteur selon la revendication 1, **caractérisé en ce que**: la structure de dissipation thermique refroidie par liquide et le carter de réducteur sont moulés d'une seule pièce.

4. Carter de réducteur selon l'une quelconque des revendications 1 à 3, **caractérisé en ce que**: une bague d'étanchéité est prévue entre le réservoir de fluide de refroidissement (1) et la plaque de recouvrement (2).

5. Carter de réducteur selon la revendication 4, **caractérisé en ce que**: le réservoir de fluide de refroidissement (1) et la plaque de recouvrement (2) sont fixés par des boulons/vis ou par soudage.

6. Ensemble d'entraînement électrique comprenant une unité moteur et une unité réducteur, **caractérisé en ce que**: l'unité moteur comprend un carter de moteur (8), **caractérisé en ce que** l'unité réducteur comprend un carter de réducteur selon l'une quelconque des revendications 1 à 5.

7. Ensemble d'entraînement électrique selon la revendication 6, **caractérisé en ce que**:
l'entrée de liquide (3) est en communication avec un passage de fluide de refroidissement situé à l'intérieur d'une chemise de refroidissement du moteur; ou
l'entrée de liquide (3) est raccordée à une sortie d'un passage de fluide de refroidissement du moteur.

8. Ensemble d'entraînement électrique selon la revendication 6, **caractérisé en ce que**: une nervure de guidage d'huile et un réservoir de récupération d'huile (10) sont prévus à l'intérieur du carter de réducteur, la nervure de guidage d'huile est utilisée pour diriger l'huile de lubrification projetée par l'engrenage du réducteur vers le réservoir de récupération d'huile (10) ainsi que vers les pièces à lubrifier et les pièces à refroidir situées à l'intérieur du carter de réducteur, et l'huile de lubrification contenue dans le réservoir de récupération d'huile (10) est transférée vers les pièces à lubrifier et les pièces à refroidir situées à l'intérieur du carter de moteur (8) par l'intermédiaire d'un passage d'huile (11).

9. Ensemble d'entraînement électrique selon l'une quelconque des revendications 6 à 8, **caractérisé en ce que**: une plaque de blocage d'huile ou une nervure de blocage d'huile (12) est prévue à l'intérieur du carter de réducteur.
